# EUROPEAN PATENT APPLICATION

(11) **EP 3 219 417 A1**
(43) Date of publication of application: **20.09.2017**
(21) Application number: 17161405.0
(22) Date of filing: 16.03.2017
(51) Int. Cl.: B22F 3/105, B22F 3/24, B22F 5/10

(54) **SACRIFICIAL CORE FOR CONGLOMERATED POWDER REMOVAL**

(30) Priority: 18.03.2016 US 201615074618
(71) Applicant: United Technologies Corporation, Farmington, CT 06032 (US)
(72) Inventor: BUTCHER, Evan, Manchester, CT Connecticut 06042 (US); TWELVES, Wendell V., Glastonbury, CT Connecticut 06033 (US); OCKEN, Thomas J., Des Moines, IA Iowa 50310 (US); VERSLUYS, Kiley James, Hartford, CT Connecticut 06103 (US)
(74) Representative: Leckey, David Herbert

(57) **Abstract**

A method of making a part (10A-G; 24; 52) including a solid portion (14; 28; 56) with an internal passage (16; 30; 58) includes building the part (10A-G; 24; 52) using an additive manufacturing process that builds the part (10A-G; 24; 52) on a layer-by-layer basis. The solid portion (14; 28; 56) of the part (10A-G; 24; 52) is formed. Forming the solid portion (14; 28; 56) includes fusing the solid portion (14; 28; 56). A solid core (12A-G; 26; 54) is formed within at least a portion of the internal passage (16; 30; 58). Forming the solid core (12A-G; 26; 54) includes fusing the solid core (12A-G; 26; 54) and forming an attachment feature (20A-G; 32; 62) on the solid core (12A-G; 26; 54). Material (18A-G; 32; 62) that is not fused, either semi-sintered or un-sintered, is positioned between the solid portion (14; 28; 56) and the solid core (12A-G; 26; 54). At least a tensile, compressive, vibratory, or torsional force is applied to the solid core (12A-G; 26; 54) at the attachment feature (20A-G; 32; 62). The solid core (12A-G; 26; 54) is then removed from the part (10A-G; 24; 52).

## Description

### BACKGROUND

The present invention relates generally to additive manufacturing, and more particularly to additively manufacturing a part with an internal passage.

Additive manufacturing is an established but growing technology that includes layerwise construction of articles from thin layers of feed material. Additive manufacturing can involve applying liquid or particulate material to a workstage, then sintering, curing, melting, and/or cutting to create a layer. The process is repeated up to several thousand times or more to construct the desired finished component or article.

In some metal additive manufacturing processes, such as electron beam melting ("EBM"), conglomerated powder can build up inside internal passages of the additive manufactured parts. This extra conglomerated powder in the part therefore must be removed in order for the internal passages of the additively manufactured part to be finished to desired specifications.

In an additive manufacturing process such as electron beam melting ("EBM"), or electron beam ("EB") powder bed additive manufacturing, energy input into a metal powder bed during the build process will melt a cross section of a solid part. However, where the part includes one or more internal passages, the electron beam energy will also tend to cause metal powder inside of the internal passages to become stuck together during the build process. As part of the EBM or EB powder bed additive manufacturing process, the entire layer of powdered material is semi-sintered (synonymous with partially sintered) to reduce the effects of powdered material scattering when the negatively charged electron beam is applied to the powder bed. Once the part is built, the semi-sintered layers of powdered material remain inside internal passages of the part. In order to finish the part, the extra semi-sintered metal powder inside the internal passages therefore must be removed by some mechanical, abrasive, chemical, or vibratory method to retrieve only the solid part. An example strategy to remove excess conglomerated, or semi-sintered, powder from the part can include accelerating like powder from a grit blast nozzle to liberate (knock loose) the semi-sintered particles from the part. Accelerated powder can be effective but only to a certain depth limit, e.g., aspect ratio, for removing semi-sintered powder from the internal passages, and only within line-of-sight access from a point exterior to the part.

When building an additively manufactured part with an internal passage, conglomerated powder becomes entrapped in the internal passage. There are a few methods known to directly and quickly remove the conglomerated powder from internal passages. One example of a standard practice consists of repeatedly using the accelerated powder blast, combined with mechanically scraping conglomerated power out of the passage.

### SUMMARY

A method of making a part including a solid portion with an internal passage includes building the part using an additive manufacturing process that builds the part on a layer-by-layer basis. The solid portion of the part is formed. Forming the solid portion includes fusing the solid portion. A solid core is formed within at least a portion of the internal passage. Forming the solid core includes fusing the solid core and forming an attachment feature on the solid core. Material that is not fused, either semi-sintered or un-sintered, is positioned between the solid portion and the solid core. At least a tensile, compressive, vibratory, or torsional force is applied to the solid core at the attachment feature. The solid core is then removed from the part.

According to another embodiment, a method of making a part including a solid portion with an internal passage includes creating a computer file defining the part in layers. The part is built using an additive manufacturing process that builds the part on a layer-by-layer basis. A solid core is formed within at least a portion of the internal passage. The solid core includes a plurality of solid core segments. An attachment feature is formed on the solid core. Material that is not fused, either semi-sintered or un-sintered, is positioned between the solid portion and the solid core. Tooling is engaged with the attachment feature. At least one of a tensile, compressive, vibratory, or torsional force is applied to the solid core. The solid core is detached from the part. The solid core is then removed from the part.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1A is a cross-sectional view of an embodiment of a cylindrical core of an additively manufactured part.
FIG. 1B is a cross-sectional view of an embodiment of a threaded core of an additively manufactured part.
FIG. 1C is a cross-sectional view of an embodiment of a tapered core of an additively manufactured part.
FIG. 1D is a cross-sectional view of an embodiment of a helical core of an additively manufactured part.
FIG. 1E is a cross-sectional perspective view of an embodiment of a sinusoidal ribbon core of an additively manufactured part.
FIG. 1F is a cross-sectional perspective view of an embodiment of a twisted ribbon core of an additively manufactured part.
FIG. 1G is a perspective view of an embodiment of a multi-ribbon core of an additively manufactured part.
FIG. 2 is a sectional view of an embodiment of a multi-segment core of an additively manufactured part.
FIG. 3 is a cross-sectional view of the embodiment of the multi-segment core taken along line 3-3 of FIG. 2.
FIG. 4 is a cross-sectional view of the embodiment of the multi-segment core taken along 4-4 of FIG. 2.
FIG. 5 is a cross-sectional view of another embodiment of a multi-segment core of an additively manufactured part.
FIG. 6 is a perspective view of a multi-segment core shown in isolation.
FIG. 7 is a flowchart of a method of additively manufacturing a part with a core.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

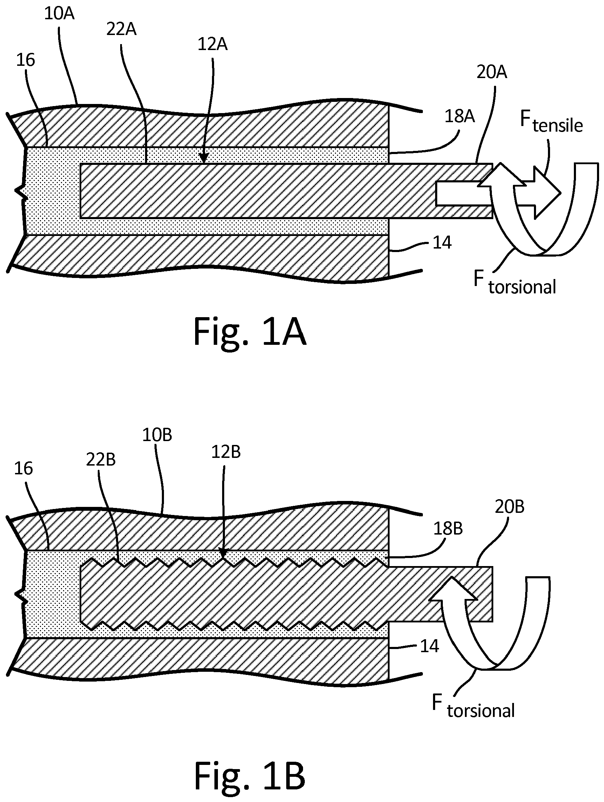

FIG. 1A is a cross-sectional view of an embodiment of additively manufactured part 10A which includes cylindrical core 12A, solid portion 14, internal passage 16, and material 18A. Material 18A is semi-sintered or un-sintered. Cylindrical core 12A includes attachment feature 20A and straight portion 22A.

Additively manufactured part 10A is built by either EBM or electron beam powder bed additive manufacturing process. As additively manufactured part 10A is built, material 18A is semi-sintered or left un-sintered (i.e., in powder form, without significant inter-particle attachment) within internal passage 16 between cylindrical core 12A and solid portion 14. Throughout the build process, cylindrical core 12A is fused to the same or similar degree as solid portion 14. Once the additive manufacturing process is complete, cylindrical core 12A is formed as a fully-fused solid core and is attached to material 18A. Material 18A is positioned within internal passage 16 and is attached to solid portion 14. Additively manufactured part 10A can be built from powdered material such as a nickel superalloy, aluminum alloy, titanium alloy, steel alloy, cobalt alloy, or other suitable metal. While EBM and electron beam powder bed additive manufacturing processes are primarily described, other additive manufacturing techniques can be employed, such as, for example, direct metal laser sintering (DMLS), laser powder bed fusion, electron beam powder bed fusion, laser powder deposition, electron beam wire, and selective laser sintering, as well as other powder bed methods in general.

For example, powder bed methods use a bed of metallic powder that rests on top of a platform to form the layers. A heat source, such as a laser or electron beam, sinters or fuses the metallic powder over the platform. The fused layer becomes the first layer. After the first layer is formed, the platform, along with the first layer, lowers and un-fused powder fills in the void over the first layer. That powder is then sintered or fused to form a second layer. Powder bed methods work well with metals as well as plastics, polymers, composites and ceramics.

After the first layer is produced, additional layers can be produced using the same method that formed the previous layer. The apparatus forms each layer with reference to a computer file, or computer aided design ("CAD") data, defining the part in layers. The CAD data can relate to a particular cross-section of additively manufactured part 10A. For example, the CAD data can include geometric data relating to cylindrical core 12A, solid portion 14, internal passage 16, and material 18A. With the layers built upon one another and joined to one another cross-section by cross-section, additively manufactured part 10A can be produced to include to include particular geometries and internal features. A single-piece cylindrical core 12A can be produced that requires no further assembly and can be directly built inside of internal passage 16.

The example powder bed additive manufacturing process discussed here is described in commonly assigned U.S. Pat. Application Ser. No. 14/960,997 to Butcher et al. entitled "Adjusting Process Parameters To Reduce Conglomerated Powder" and filed December 7, 2015.

Cylindrical core 12A is a solid core in the sense that cylindrical core 12A is fused to the same degree as additively manufactured part 10A. Cylindrical core 12A includes straight portion 22A which includes a solid cylindrical shape with in this embodiment. In further embodiments, cylindrical core 12A can also include a hollow center, as well as simple and/or complex geometries throughout an interior of cylindrical core 12A such as truss structures or lattice structures. Cylindrical core 12A can also be configured to shrink in size when force is applied to cylindrical core 12A. An example of this includes elastically or plastically deforming cylindrical core 12A as a tensile force is applied to cylindrical core 12A to decrease a diameter of cylindrical core 12A and detach cylindrical core 12A from material 18A.

Attachment feature 20A is formed on cylindrical core 12A during the additive manufacturing build process. Attachment feature 20A is configured to receive tooling for attaching with cylindrical core 12A. Attachment feature 20A can include one or more features such as a hole, bore, tongue, groove, receptacle, link, insert, chuck, socket, clamp, or other type of engagement feature configured to engage with tooling such as a hex drive, square drive, or other suitable attachment form factors. Once tooling is engaged to attachment feature 20A, at least one of a tensile, compressive, vibratory, or torsional force (such as Fₜₑₙₛᵢₗₑ and Fₜₒᵣₛᵢₒₙₐₗ) is applied to cylindrical core 12A at attachment feature 20A to detach cylindrical core 12A from material 18A. The at least one of a tensile, compressive, vibratory, or torsional force can be applied, for instance, by standard compressive hammer drill, tensile hammer drill, impact hammer, impact wrench, breaker bar, drill, hand tool, and/or through application of vibration. These applied forces can be monotonic or cyclical. In particular, cylindrical core 12A can be vibrated while still within internal passage 16 to loosen material 18A within internal passage 16. Examples of vibrating cylindrical core 12A include pneumatically vibrating, electrically vibrating, and ultrasonically vibrating cylindrical core 12A relative to additively manufactured part 10A.

Once cylindrical core 12A is detached from material 18A, cylindrical core 12A is removed from additively manufactured part 10A. Material 18A is then removed through powder recovery system ("PRS") or abrasive flow techniques. PRS techniques include blasting powder at the part to break apart material 18A and abrasive flow techniques include flowing a liquid containing abrasive particles through internal passage 16A to remove material 18A.

Forming additively manufactured part 10A with cylindrical core 12A allows for manufacturability of internal passage 16 of additively manufactured part 10A by allowing the removal of material 18A from deep or high aspect ratio passages. Forming additively manufactured part 10A with cylindrical core 12A also allows for better thermal conductivity to the adjacent passage walls, which in turn enables better manufacturability, reduced surface roughness on passage walls, and improved dimensional results in the as-produced state. A smaller amount of support structures will also be required on the interior of internal passage 16, due to solid cylindrical core 12A being solid which allows for greater thermal conduction than a powder bed alone, which can be a prevalent issue particularly in laser powder bed fusion processes.

The benefits of using cylindrical core 12A include reducing the amount of material 18A to be removed from internal passage 16 due to the void left from cylindrical core 12A after cylindrical core 12A is removed from additively manufactured part 10A. The void left from cylindrical core 12A allows for less material 18A left in internal passage 16 after the build process (than if a solid core was not used) resulting in less material 18A required to be removed by PRS and/or abrasive flow techniques. Use of cylindrical core 12A also allows material 18A to be removed from internal passage due to the increased access to material 18A after cylindrical core 12A is removed. If cylindrical core 12A were not used, for example, material 18A could not all be removed from all portions of internal passage 16 and additively manufactured part 10A would not functioned as desired.

FIG. 1B is a cross-sectional view of an embodiment of additively manufactured part 10B with threaded core 12B. Additively manufactured part 10B includes threaded core 12B, solid portion 14, internal passage 16, and material 18B. Threaded core 12B includes attachment feature 20B and threaded portion 22B.

Due to threaded portion 22B being shaped like a screw, removal of threaded core 12B can be performed by applying a monotonic or repetitive impact torsional force Fₜₒᵣₛᵢₒₙₐₗ to attachment feature 20B (without the need to apply any tensile force) to detach threaded core 12B from material 18B and un-screw threaded core 12B out of material 18B.

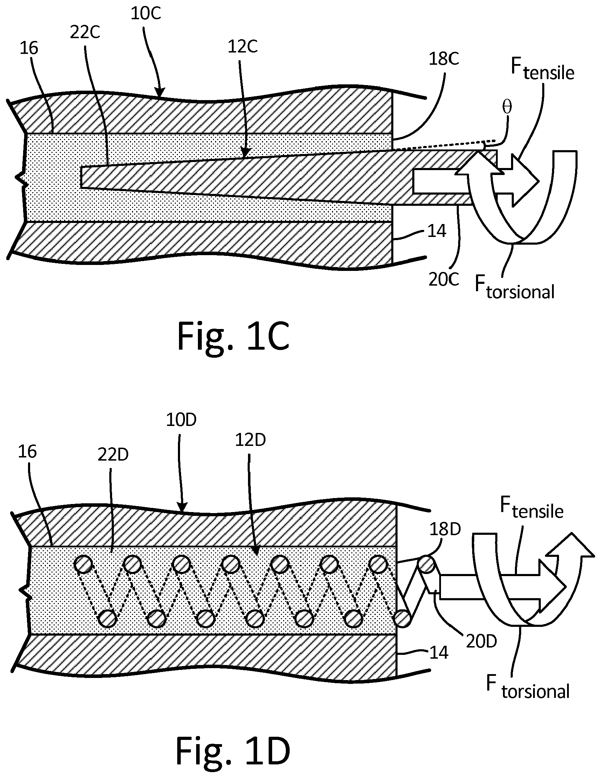

FIG. 1C is a cross-sectional view of an embodiment of additively manufactured part 10C with tapered core 12C. Additively manufactured part 10C includes tapered core 12C, solid portion 14, internal passage 16, and material 18C. Tapered core 12C includes attachment feature 20C and tapered portion 22C. Attachment feature 20C is un-tapered in the illustrated embodiment.

Tapered portion 22C affects the removal of tapered core 12C from material 18C by reducing or eliminating a frictional force between tapered portion 22C and material 18C such as is present with cylindrical core 12A. Once tapered core 12C is detached from material 18C, spacing is created between tapered portion 22C and material 18C allowing tapered core 12C to be removed from additively manufactured part 10C without coming into further contact with material 18C. Angle θ represents an angle of taper of tapered portion 22C relative to attachment feature 20C. Angle θ can range from 0° to 5°. In further embodiments, the taper angle θ can vary along a length of core 12C, or core 12C can be curvably tapered, as desired for particular embodiments.

Tapered core 12C is beneficial in examples where internal passage 16 includes a high aspect ratio. The aspect ratio of a passage is defined as the depth-to-diameter ratio of the passage. An example of a high aspect ratio is 4 to 1. In example with an aspect ratio of greater than 4 to 1, a cylindrical core experiences a large amount of frictional force as the cylindrical core is removed out of an internal passage. Because cylindrical core 12C does not experience any frictional force from material 18C after cylindrical core 12C is detached from material 18C, the use of tapered core 12C is particularly beneficial in an example where internal passage 16 includes a high aspect ratio.

FIG. 1D is a cross-sectional view of an embodiment of additively manufactured part 10D with helical core 12D. Additively manufactured part 10D includes helical core 12D, solid portion 14, internal passage 16, and material 18D. Helical core 12D includes attachment feature 20D and helical portion 22D.

Removal of helical core 12D can be performed by applying tensile force Fₜₑₙₛᵢₗₑ to attachment feature 20D. As tensile force Fₜₑₙₛᵢₗₑ is applied to attachment feature 20D, helical portion 22D detaches from material 18D. Tensile force Fₜₑₙₛᵢₗₑ is continually applied to attachment feature 20D so as pull helical core 12D out of material 18D. Additionally, or in the alternative, torsional force Fₜₒᵣₛᵢₒₙₐₗ can be applied to un-screw helical core 12D out of material 18D.

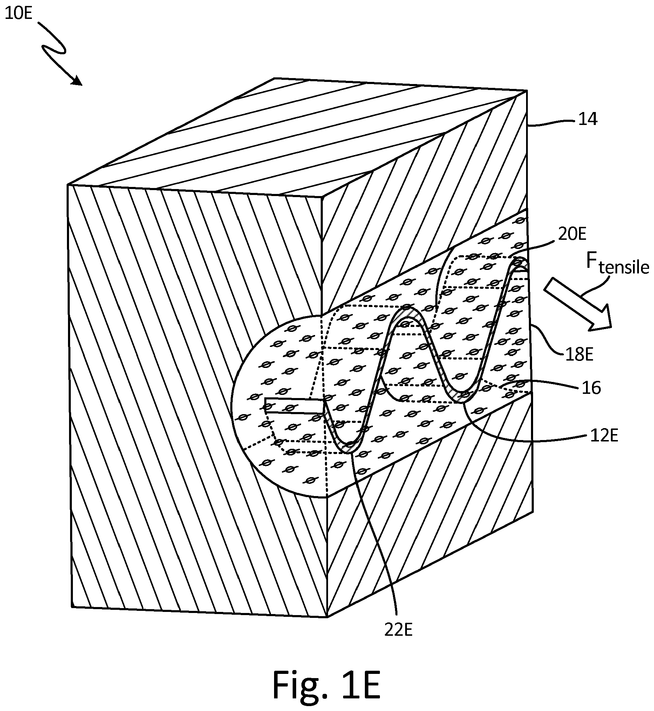

FIG. 1E is a cross-sectional perspective view of additively manufactured part 10E with ribbon core 12E. Additively manufactured part 10E includes ribbon core 12E, solid portion 14, internal passage 16, and material 18E. Ribbon core 12E includes attachment feature 20E and ribbon portion 22E.

Ribbon portion 22E includes a long, narrow strip shape. Along a pathway of internal passage 16, ribbon portion 22E can include a sinusoidal shape as shown in FIG. 1E. A thickness of ribbon portion 22E can be less than 1/10 of a diameter of internal passage 16. A width of ribbon portion 22E is greater than the thickness of ribbon portion 22E. In further embodiments, the shape ribbon portion 22E can vary to include other shapes, sizes, width, and thickness as well as non-sinusoidal configurations as desired for particular embodiments.

Removal of ribbon core 12E can be performed by applying tensile force Fₜₑₙₛᵢₗₑ to attachment feature 20E. As tensile force Fₜₑₙₛᵢₗₑ is applied to attachment feature 20E, ribbon portion 22E detaches from material 18E. Tensile force Fₜₑₙₛᵢₗₑ can be continually applied to attachment feature 20E so as to pull ribbon core 12E out of material 18E (without the need to apply torsional force).

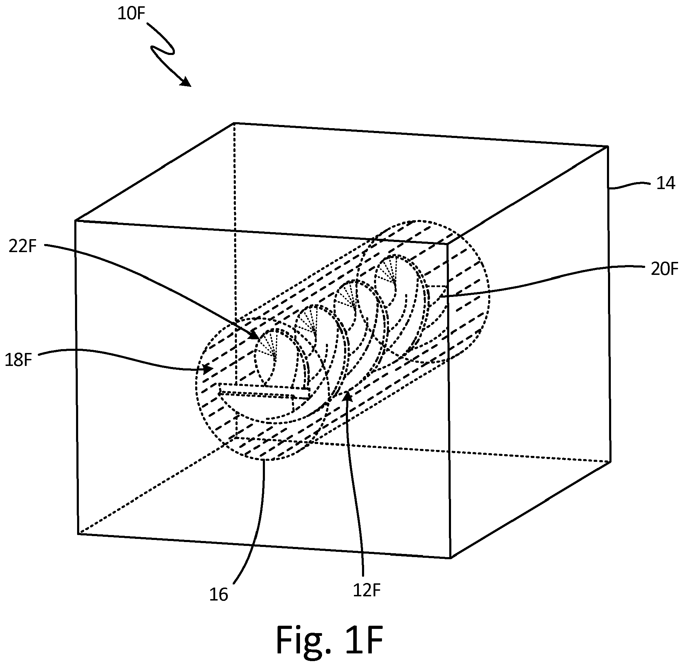

FIG. 1F is a cross-sectional perspective view of additively manufactured part 10F with twisted ribbon core 12F. Additively manufactured part 10F includes twisted ribbon core 12F, solid portion 14, internal passage 16, and material 18F. Twisted ribbon core 12F includes attachment feature 20F and twisted ribbon portion 22F.

Twisted ribbon portion 22F includes a long, narrow strip shape twisted about a major axis of twisted ribbon portion 22F. Along a pathway of internal passage 16, twisted ribbon portion 22F can include a twisted shape as shown in FIG. 1F. A thickness of twisted ribbon portion 22F can be less than 1/10 of the diameter of internal passage 16. A width of twisted ribbon portion 22F is greater than the thickness of twisted ribbon portion 22F and less than the diameter of internal passage 16. In further embodiments, the shape twisted ribbon portion 22F can vary to include other shapes, sizes, width, and thickness as well as varying degrees of twist as desired for particular embodiments.

Due to twisted ribbon portion 22F including a twisted shape, removal of twisted ribbon core 12F can be performed by applying torsional force to attachment feature 20F to detach twisted ribbon core 12F from material 18F and un-screw twisted ribbon core 12F out of material 18F (without the need to apply tensile force).

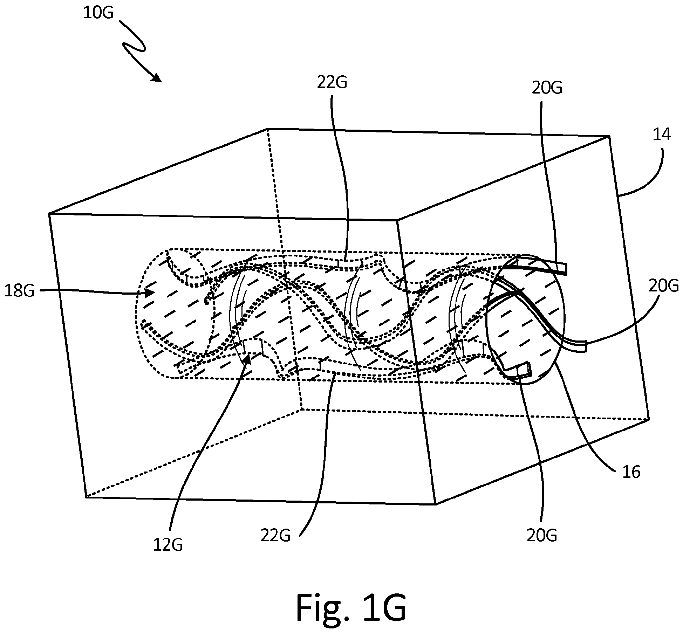

FIG. 1G is a perspective view of additively manufactured part 10G with multi-ribbon core 12G. Additively manufactured part 10G includes multi-ribbon core 12G, solid portion 14, internal passage 16, and material 18G. Multi-ribbon core 12G includes attachment features 20G and wavy ribbon portions 22G. Wavy ribbon portions 22G can be conjoined or unconnected to each other.

Removal of multi-ribbon core 12G can be performed by applying tensile force Fₜₑₙₛᵢₗₑ to attachment features 20G. As tensile force Fₜₑₙₛᵢₗₑ is applied to attachment features 20G, wavy ribbon portions 22G detach from material 18G. Tensile force Fₜₑₙₛᵢₗₑ can be continually applied to attachment features 20G so as to pull multi-ribbon core 12G out of material 18G (wavy ribbon portions 22G can be pulled individually or all together).

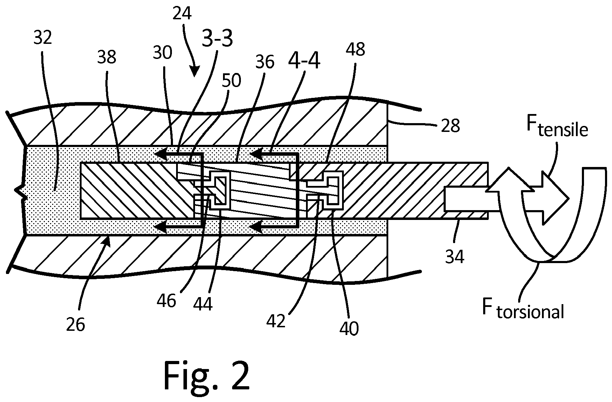

FIG. 2 is a sectional view of an embodiment of additively manufactured part 24 with multi-segment core 26. Additively manufactured part 24 includes multi-segment core 26, solid portion 28, internal passage 30, and material 32. Multi-segment core 26 includes attachment feature 34, first core segment 36, and second core segment 38. The location of the section from which FIG. 2 is viewed is located slightly off-center from a center of multi-segment core 26.

Attachment feature 34 includes first female interlocking feature 40 which receives and connects with first male interlocking feature 42 of first core segment 36. First core segment 36 includes second female interlocking feature 44 which receives and connects with second male interlocking feature 46. As torsional force Fₜₒᵣₛᵢₒₙₐₗ is applied to attachment feature 34, attachment feature 34 breaks from material 32 allowing attachment feature 34 to rotate. As attachment feature 34 is rotated, first female interlocking feature 40 of attachment feature 34 engages with first male interlocking feature 42 of first core segment 36. As force Fₜₒᵣₛᵢₒₙₐₗ is further applied to attachment feature 34, first core segment 36 also breaks from material 32 due to torsional force Fₜₒᵣₛᵢₒₙₐₗ being transferred to first core segment 36 from attachment feature 34. As first core segment 36 is rotated with attachment feature 34, second female interlocking feature 44 of first core segment 36 engages with second male interlocking feature 46 of second core segment 38. As force Fₜₒᵣₛᵢₒₙₐₗ is further applied to attachment feature 34, second core segment 38 also breaks from material 32 due to torsional force Fₜₒᵣₛᵢₒₙₐₗ being transferred to second core segment 38 through first core segment 36 from attachment feature 34.

Multi-segment core 26 provides the benefit of a staged shear and frictional response between multi-segment core 26 and material 32. As torsional force Fₜₒᵣₛᵢₒₙₐₗ is applied to attachment feature 34, there is typically only one core segment at a time that is being sheared from material 32. For example, as torsional force Fₜₒᵣₛᵢₒₙₐₗ is applied to attachment feature 34, attachment feature 34 first breaks from material 32 before engaging with first core segment 36. As attachment feature 34 rotates, attachment feature 34 locks with first core segment 36 causing first core segment 36 to break from material 32. Because first core segment 36 is attached to material 32 only along a length of first core segment 36, an amount of torsional force Fₜₒᵣₛᵢₒₙₐₗ required to break first core segment 36 from material 32 is proportional to the length of first core segment 36. The amount of torsional force Fₜₒᵣₛᵢₒₙₐₗ required to break first core segment 36 from material 32 is less than an amount of torsional force Fₜₒᵣₛᵢₒₙₐₗ that would be required to break a core segment with a length longer than first core segment 36 because a longer core segment would have more surface area attached to material 32 thus requiring more torsional force to be applied to break the connection between material 32 and a longer core segment. After an amount of torsional force Fₜₒᵣₛᵢₒₙₐₗ sufficient to break free all of attachment feature 34, first core segment 36, and second core segment 38 from material 32, tensile force Fₜₑₙₛᵢₗₑ is applied to attachment feature 34 to remove multi-segment core 26 from additively manufactured part 24.

In the example shown, multi-segment core 26 includes attachment feature 34 and two core segments 36 and 38. However, the illustrated embodiment is shown merely by way of example and not limitation. In other embodiments, a multi-segment core can include more or less, longer or shorter, or wider or narrower core segments, to provide a desired shear and/or frictional response between the multi-segment core and the filler material.

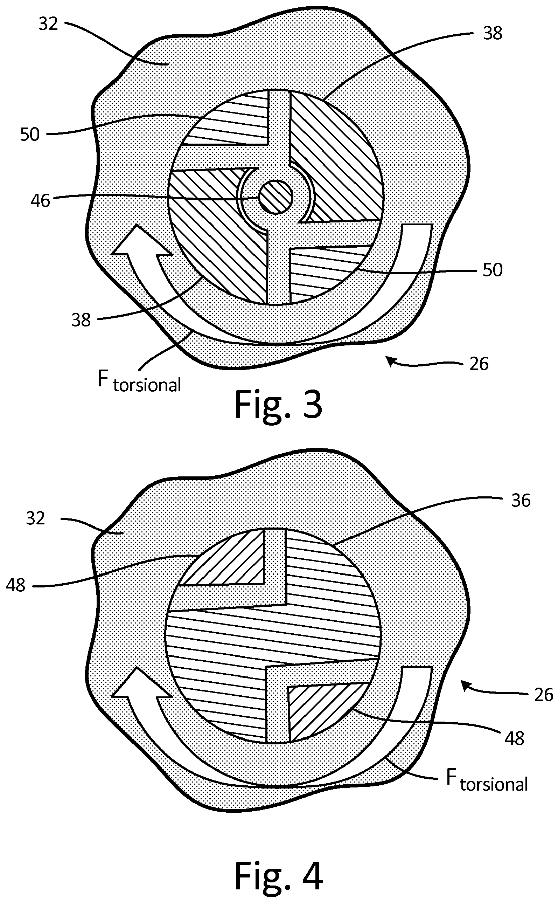

FIG. 3 is a cross-sectional view of multi-segment core 26 taken along line 3-3 of FIG. 2 and FIG. 4 is a cross-sectional view of multi-segment core 26 taken along 4-4 of FIG. 2. First core segment 36 and second core segment 38 interlock with each other such that as first core segment 36 is rotated, the spacing between first core segment 36 and second core segment 38 is reduced, first core segment comes into angular contact with second core segment 38, and torsional force Fₜₒᵣₛᵢₒₙₐₗ is transferred from first core segment 36 to second core segment 38. The interaction of first female interlocking feature 40 and first male interlocking feature 42 provides a twist-to-lock feature between first core segment 36 and second core segment 38 whereby application of relative torsional engagement between first core segment 36 and second core segment 38 causes first core segment 36 and second core segment 38 to lock with each other such that first core segment 36 and second core segment 38 can be rotated and pulled together.

Specifically, fingers 48 of attachment feature 34 enable angular contact with and transmission of torsional force Fₜₒᵣₛᵢₒₙₐₗ to first core segment 36. Fingers 50 of first core segment 36 enable angular contact with and transmission of torsional force Fₜₒᵣₛᵢₒₙₐₗ to second core segment 38. Fingers 48 and 50 include a quarter-circle cross sectional shape. First core segment 36 and second core segment 38 can have cut-outs which are shaped to receive the quarter-circle shapes of fingers 48 and 50 respectively. In other embodiments, fingers 48 and 50 can include more or less, longer or shorter, or wider or narrower shapes and/or cross-sections, to provide a desired torsional response between attachment feature 34, first core segment 36, and second core segment 38.

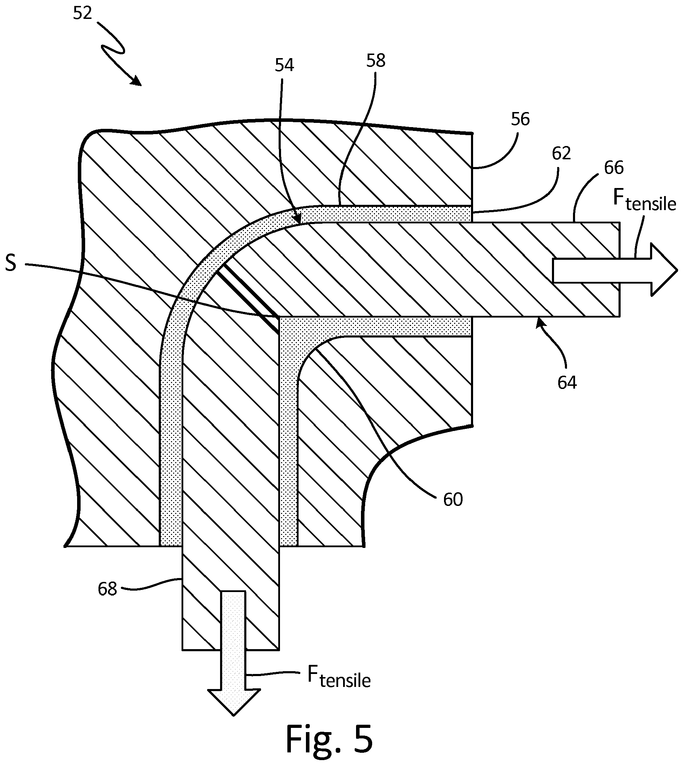

FIG. 5 is a cross-sectional view of additively manufactured part 52 with multi-segment core 54. Additively manufactured part 52 includes multi-segment core 54, solid portion 56, internal passage 58 with bend 60, and material 62. Multi-segment core 54 includes first core segment 64 with attachment feature 66 and second core segment 68.

Due to the non-linear geometry of internal passage 58 with bend 60, a core configuration with more than a single linear core segment is required. If a single solid core were formed in internal passage 58 with bend 60, upon attempting removal, the single core would not pass past bend 60.

Use of first core segment 64 and second core segment 68 in additively manufactured part 52 allows for formation and removal of solid cores within an internal passage which includes a non-linear geometry. In this example, internal passage 58 includes bend 60 and essentially two major portions of passageway. As additively manufactured part 52 is formed, first core segment 64 and second core segment 68 are formed to create separation S between first core segment 64 and second core segment 68. After additively manufactured part 52 is formed, first tensile force Fₜₑₙₛᵢₗₑ is applied to first core segment 64 and second tensile force Fₜₑₙₛᵢₗₑ is applied to second core segment 68. In other examples, compressive, vibratory, or torsional forces can also be applied to either or both of first core segment 64 and second core segment 68. These applied forces can be monotonic or cyclical.

Internal passage 58 with bend 60 is an example of an internal passage with more than just a simple linear passageway extending through additively manufactured part 52. However, the illustrated embodiment is shown merely by way of example and not limitation. In other examples, other internal passageways can include bends with different shapes than internal passage 58 with bend 60.

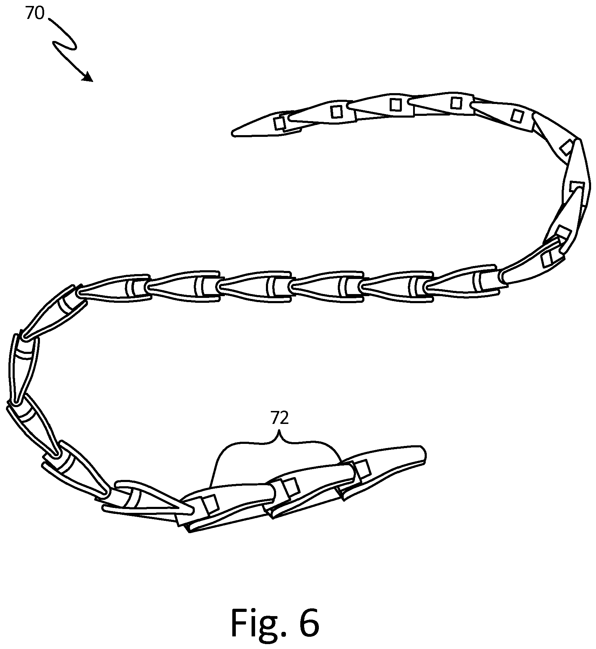

FIG. 6 is a perspective view multi-segment core 70 shown in isolation. Multi-segment core 70 includes a plurality of links 72. Multi-segment core 70 can be used in any of the preceding embodiments of internal passageways including both linear internal passageways and internal passageways including complex geometries.

Each link 72 includes features allowing links 72 to pivot relative to each other. As a tensile, compressive, vibratory, and/or torsional force is applied to multi-segment core 70 and as multi-segment core 70 is maneuvered through an internal passage of an additively manufactured part during removal, links 72 to pivot relative to each other to conform to a shape of the internal passage. The ability of links 72 to conform to the shape of the internal passageway allows for the use of multi-segment core 70 in internal passageways including complex geometries and numerous bends, twists, and turns, while still being able to extract an entire length of multi-segment core 70 by applying at least one of a tensile, compressive, vibratory, or torsional force to multi-segment core 70.

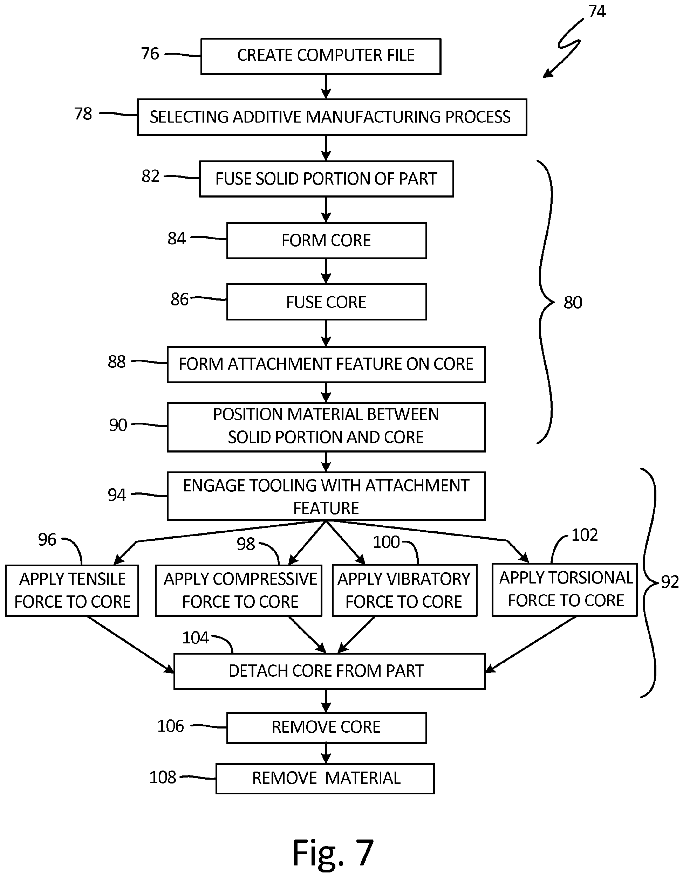

FIG. 7 is a flowchart of method 74 of additively manufacturing a part with a core. Method 74 includes a series of steps to additively manufacture a part. In this embodiment, the part is formed to include an internal passage extending through at least a portion of the part. While EBM is described, any other form of additive manufacturing or 3D printing, such as EB powder bed additive manufacturing, can be used.

Step 76 includes creating a computer file defining the part in layers, with the part including an internal passage and a solid portion. Step 78 includes selecting an additive manufacturing process to build the part on a layer-by-layer basis, with the additive manufacturing process being either EBM or electron beam powder bed additive manufacturing. The part can be built from powdered material such as a nickel superalloy, aluminum alloy, titanium alloy, steel alloy, cobalt alloy, or other suitable metal.

Additively building the part collectively (step 80), includes individual steps 82-90. Step 82 includes forming the solid portion of the part. Step 84 includes forming a core within at least a portion of the internal passage. Forming the core includes steps 86 and 88. Step 86 includes fusing the core which includes forming at least one of a straight, threaded, angled, chain, ribbon, or helical portion that engages with a semi-sintered or un-sintered material positioned between the core and the solid portion. Step 88 includes forming an attachment feature on the core. Steps 86 and 88 can be performed concurrently. At this stage, method 74 can include either forming one core segment or forming at least two core segments. Method 74 can also include forming an interlocking feature on each core segment. Step 90 includes positioning the material between the solid portion and the core. Steps 90 can be performed concurrently with steps 86 and/or 88.

Applying work to the core collectively (step 92), includes individual steps 94-104. Step 94 includes engaging tooling with the attachment feature on the core. After step 94, worked can be applied to the core by one of step 96, step 98, step 100, step 102 or a combination of at least two of steps 96-102. Step 96 includes applying tensile force to the core. Step 98 includes applying compressive force to the core. Step 100 includes applying vibratory force to the core. Vibrating the core can include at least one of pneumatically vibrating, electrically vibrating, and ultrasonically vibrating the core relative to the part. Step 102 includes applying torsional force to the core. Applying work to the core can further include engaging the interlocking features of the at least two core segments with each other to connect the at least two core segments. Step 104 includes detaching the core from the part. Step 106 includes removing the core from the part. Step 108 includes removing the material from the part.

### Discussion of Possible Embodiments

The following are non-exclusive descriptions of possible embodiments of the present invention.

A method of making a part comprising a solid portion with an internal passage can include building the part using an additive manufacturing process that builds the part on a layer-by-layer basis. The solid portion of the part can be formed. Forming the solid portion can include fusing the solid portion. A solid core can be formed within at least a portion of the internal passage. Forming the solid core can include fusing the solid core and forming an attachment feature on the solid core. Material that is not fused, either semi-sintered or un-sintered, is positioned between the solid portion and the solid core. At least a tensile, compressive, vibratory, and/or torsional force can be applied to the core. The solid core can then be removed from the part.

The method of the preceding paragraph can optionally include, additionally and/or alternatively, any one or more of the following features, configurations and/or additional components:
a further embodiment of the foregoing method, wherein the method can further include creating a computer file defining the part in layers;
a further embodiment of any of the foregoing methods, wherein forming the attachment feature can further include forming at least one of a hole, bore, tongue, groove, receptacle, link, insert, chuck, socket, or clamp on the attachment feature;
a further embodiment of any of the foregoing methods, the method can further comprise engaging tooling with the attachment feature on the solid core;
a further embodiment of any of the foregoing methods, wherein removing the solid core can further include detaching the solid core from the material positioned between the solid portion and the solid core;
a further embodiment of any of the foregoing methods, wherein forming the solid core can further include forming at least one of a straight, threaded, angled, chain, ribbon, and/or helical portion that engages with the material positioned between the solid portion and the solid core;
a further embodiment of any of the foregoing methods, wherein applying at least one of a tensile, compressive, vibratory, and/or torsional force to the solid core can further include at least one of pneumatically vibrating, electrically vibrating, and ultrasonically vibrating the solid core relative to the part;
a further embodiment of any of the foregoing methods, wherein the additive manufacturing process that builds the part on a layer-by-layer basis can be selected from the group consisting of electron beam melting and electron beam powder bed additive manufacturing;
a further embodiment of any of the foregoing methods, wherein the method can further comprise removing the material positioned between the solid portion and the solid core from the part;
a further embodiment of any of the foregoing methods, wherein forming the solid core can further include forming a plurality of solid core segments;
a further embodiment of any of the foregoing methods, wherein forming the plurality of solid core segments can further include forming an interlocking feature on each of the plurality of solid core segments;
a further embodiment of any of the foregoing methods, wherein applying at least one of a tensile, compressive, vibratory, or torsional force to the solid core can further include engaging the interlocking features of the plurality of solid core segments with each other to connect the plurality of solid core segments;
a further embodiment of any of the foregoing methods, wherein applying at least one of a tensile, compressive, vibratory, or torsional force to the solid core can further include twisting the plurality of solid core segments relative to each other to engage the interlocking features on each of the plurality of solid core segments; and/or
a further embodiment of any of the foregoing methods, wherein removing the solid core can further include pivoting at least some of the plurality of solid core segments relative to each other as at least one of a tensile, compressive, vibratory, or torsional force is applied to the solid core such that the solid core can be maneuvered through the internal passage as the solid core is removed from the part.

A method of making a part comprising a solid portion with an internal passage can include creating a computer file defining the part in layers. The part can be built using an additive manufacturing process that builds the part on a layer-by-layer basis. A solid core can be formed within at least a portion of the internal passage. The solid core can include a plurality of solid core segments. An attachment feature can be formed on the solid core. Material that is not fused, either semi-sintered or un-sintered, is positioned between the solid portion and the solid core. Tooling can be engaged with the attachment feature. At least one of a tensile, compressive, vibratory, or torsional force can be applied to the solid core. The solid core can be detached from the part. The solid core can then be removed from the part.

The method of the preceding paragraph can optionally include, additionally and/or alternatively, any one or more of the following features, configurations and/or additional components:
a further embodiment of the foregoing method, wherein the method can further comprise removing the material positioned between the solid portion and the solid core from the part;
a further embodiment of any of the foregoing methods, wherein forming the solid core can further include forming at least one of a straight, threaded, angled, chain, ribbon, and/or helical portion that engages with the material positioned between the solid portion and the solid core;
a further embodiment of any of the foregoing methods, wherein forming the solid core can further include forming an interlocking feature on each of the plurality of solid core segments;
a further embodiment of any of the foregoing methods, wherein applying at least one of a tensile, compressive, vibratory, or torsional force to the solid core can further include engaging the interlocking features of the plurality of solid core segments with each other to connect the plurality of solid core segments; and/or
a further embodiment of any of the foregoing methods, wherein applying at least one of a tensile, compressive, vibratory, or torsional force to the solid core can further include twisting the plurality of solid core segments relative to each other to engage the interlocking features on each of the plurality of solid core segments.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, torsional, tensile, compressive, or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

## Claims

1. A method of making a part (10A-G; 24; 52) comprising a solid portion (14; 28; 56) with an internal passage (16; 30; 58), the method comprising:
(a) building the part (10A-G); 24; 52) using an additive manufacturing process that builds the part (10A-G; 24; 52) on a layer-by-layer basis, wherein building the part (10A-G; 24; 52) comprises:
i. forming the solid portion (14; 28; 56) of the part (10A-G; 24; 52), wherein forming the solid portion (14; 28; 56) comprises:
fusing the solid portion (14; 28; 56);
ii. forming a solid core (12A-G; 26; 54; 70) within at least a portion of the internal passage (16; 30; 58), wherein forming the solid core (12A-G; 26; 54; 70) comprises:
fusing the solid core (12A-G; 26; 54; 70); and
forming an attachment feature (20A-G; 34; 66) on the solid core (12A-G; 26; 54; 70);
iii. positioning a material (18A-G; 32; 62) between the solid portion (14; 28; 56) and the solid core (12A-G; 26; 54; 70), wherein the material (18A-G; 32; 62) is semi-sintered or un-sintered;
(b) applying at least one of a tensile, compressive, vibratory, or torsional force to the solid core (12A-G; 26; 54; 70) at the attachment feature (20A-G; 34; 66); and
(c) removing the solid core (12A-G; 26; 54; 70) from the part (10A-G; 24; 52).

2. The method of claim 1, further comprising:
creating a computer file defining the part (10A-G; 24; 52) in layers.

3. The method of claim 1 or 2, wherein forming the attachment feature (20A-G; 34; 66) further comprises:
forming at least one of a hole, bore, tongue, groove, receptacle, link, insert, chuck, socket, or clamp on the attachment feature (20A-G; 34; 66).

4. The method of any preceding claim, and further comprising:
engaging tooling with the attachment feature (20A-G; 34; 66) on the solid core (12A-G; 26; 54; 70).

5. The method of any preceding claim, wherein removing the solid core (12A-G; 26; 54; 70) further comprises:
detaching the solid core (12A-G; 26; 54; 70) from the material (18A-G; 32; 62) positioned between the solid portion (14; 28; 56) and the solid core (12A-G; 26; 54; 70).

6. The method of any preceding claim, wherein applying at least one of a tensile, compressive, vibratory, or torsional force to the solid core (12A-G; 26; 54; 70) further comprises:
at least one of pneumatically vibrating, electrically vibrating, and ultrasonically vibrating the solid core (12A-G; 26; 54; 70) relative to the part (10A-G; 24; 52).

7. The method of any preceding claim, wherein the additive manufacturing process that builds the part (10A-G; 24; 52) on a layer-by-layer basis is selected from the group consisting of electron beam melting and electron beam powder bed additive manufacturing.

8. The method of any preceding claim, wherein forming the solid core (26; 54; 70) further comprises:
forming a plurality of solid core segments (36, 38; 64, 68; 72).

9. A method of making a part (10A-G; 24; 52), the method comprising:
(a) creating a computer file defining the part (10A-G; 24; 52) in layers, the part (10A-G; 24; 52) comprising a solid portion (14; 28; 56) with an internal passage (16; 30; 58);
(b) building the part (10A-G; 24; 52) using an additive manufacturing process that builds the part (10A-G; 24; 52) on a layer-by-layer basis, wherein building the part (10A-G; 24; 52) comprises:
i. forming a solid core (12A-G; 26; 54; 70) within at least a portion of the internal passage (16; 30; 58), wherein the solid core (12A-G; 26; 54; 70) includes a plurality of solid core segments (36, 38; 72);
ii. forming an attachment feature (20A-G; 34; 66) on the solid core (12A-G; 26; 54; 70);
iii. positioning a material (18A-G; 32; 62) between the solid portion (14; 28; 56) and the solid core (12A- G; 26; 54; 70), wherein the material (18A-G; 32; 62) is semi-sintered or un-sintered;
(e) engaging tooling with the attachment feature (20A-G; 34; 66);
(f) applying at least one of a tensile, compressive, vibratory, or torsional force to the solid core (12A-G; 26; 54; 70);
(g) detaching the solid core (12A-G; 26; 54; 70) from the part (10A-G; 24; 52); and
(d) removing the solid core (12A-G; 26; 54; 70) from the part (10A-G; 24; 52).

10. The method of claim 8 or 9, wherein forming the plurality of solid core segments (36, 38; 72) or forming the solid core (26; 54; 70) further comprises:
forming an interlocking feature (40, 42, 44, 46) on each of the plurality of solid core segments (36, 38; 72).

11. The method of claim 10, wherein applying at least one of a tensile, compressive, vibratory, or torsional force to the solid core (26; 70) further comprises:
engaging the interlocking features (40, 42, 44, 46) of the plurality of solid core segments (36, 38; 72) with each other to connect the plurality of solid core segments (36, 38; 72).

12. The method of claim 11, wherein applying at least one of a tensile, compressive, vibratory, or torsional force to the solid core (26; 70) further comprises:
twisting the plurality of solid core segments (36, 38; 72) relative to each other to engage the interlocking features (40, 42, 44, 46) of the plurality of solid core segments (36, 38; 72).

13. The method of any of claims 8 to 12, wherein removing the solid core (26; 70) further comprises:
pivoting at least some of the plurality of solid core segments (36, 38; 72) relative to each other as at least one of a tensile, compressive, vibratory, or torsional force is applied to the solid core (26; 70) such that the solid core (26; 70) is maneuvered through the internal passage (30) as the solid core (26; 70) is removed from the part (24).

14. The method of any preceding claim, wherein forming the solid core (12A-G; 26; 54; 70) further comprises:
forming at least one of a straight (22A), threaded (22B), angled (22C), chain (70), ribbon (22E; F; G), or helical (22D) portion that engages with the material (18A-G; 32; 62) positioned between the solid portion (14; 28; 56) and the solid core (12A-G; 26; 54; 70).

15. The method of any preceding claim, and further comprising:
removing the material (18A-G; 32; 62) positioned between the solid portion (14; 28; 56) and the solid core (12A-G; 26; 54; 70) from the part (10A-G; 24; 52).
